# EUROPEAN PATENT APPLICATION

(11) **EP 2 711 201 A2**
(43) Date of publication of application: **26.03.2014**
(21) Application number: 13185642.9
(22) Date of filing: 24.09.2013
(51) Int. Cl.: B60C 11/24

(54) **Tire replacement warning device**

(30) Priority: 25.09.2012 TW 101135064
(71) Applicant: Hsu, Ya-Ting, Taichung City 406 (TW); Hsu, Yen-Hao, Taichung City 406 (TW)
(72) Inventor: Hsu, Ya-Ting, Taichung City 406 (TW); Hsu, Yen-Hao, Taichung City 406 (TW)
(74) Representative: Chaillot, Geneviève

(57) **Abstract**

A tire includes a tread (20) and two sidewalls (21) are located on two sides of the tread (20). The tread (20) has multiple tread grooves (22, 23) defined therein and a safety face (30) protrudes from the inner end of one of the tread grooves (22, 23). A sensing device (40) is located in the tread (20) and has a sensing line (41) which is located beneath the safety face (30) and emits wireless signals when the sensing line (41) is exposed after the safety face (30) is worn out.

## Description

### FIELD OF THE INVENTION

The present invention relates to a tire, and more particularly, to a vehicle tire with a tire replacement warning device due to tire wearing.

### BACKGROUND OF THE INVENTION

The conventional tire has a tread which provides grip and the tread will be worn out due to friction, the beaker located beneath the tread cannot provide proper grip and the tire slips when braking. Once the tread is worn out and tire is deformed, it is time for a replacement with a new tire for safety sake. In order to provide the user a visible signal when the replacement time arrives, a safety face is located in the tread so that when the tread is in flush with the safety face, this means that the tire needs to be replaced.

However, the users do not check the safety faces of the tires frequently so that it is a potential risk to use the tires without knowing that the safety faces are visible. The tires with the safety faces visible can cause dangerous results.

The present invention intends to provide a tire replacement warning device which sends a signal to the warning signal receiver which provides an audio signal or light signal to the user.

### SUMMARY OF THE INVENTION

The present invention relates to a tire and comprises a tread and two sidewalls are located on two sides of the tread. The tread has multiple tread grooves defined therein and a safety face protrudes from the inner end of one of the tread grooves. A sensing device is located in the tread and has a sensing line which is located beneath the safety face and able to emit wireless signals when the sensing line is exposed.

Alternatively, the present invention provides tire with a tread and two sidewalls on two sides of the tread. The tread has multiple tread grooves defined therein and a safety face protrudes from the inner end of one of the tread grooves. A sensing device is located in the tread and comprises a sensing line and an integral circuit. The sensing line is located beneath the safety face and able to emit wireless signals.

The present invention provides a tire replacement warning device and comprises a safety face protruding from the inner end of one of the tread grooves of a tire. A sensing device is located in the tread and has a sensing line which is located beneath the safety face and able to emit wireless signals. A warning signal receiver is installed to the car and receives the wireless signals from the sensing device.

The primary object of the present invention is to provide a tire replacement warning device wherein when the sensing line located beneath the safety face is exposed, a signal is sent to the receiver from which the user is acknowledged to replace the tire.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view, partial removed, of the tire and the tire replacement warning device of the present invention is disclosed;
Fig. 2 is an enlarged view to show the tire replacement warning device of the present invention;
Fig. 3 is a cross sectional view of the tire and shows the tire replacement warning device of the present invention;
Fig. 4 is a cross sectional view of the tire and shows that the tread of tire is almost worn out and the sensing line of the tire replacement warning device of the present invention is exposed;
Fig. 5 is a cross sectional view of the tire and shows that the safety face is worn out and the sensing line of the tire replacement warning device of the present invention is broken, and
Fig. 6 is a perspective view, partial removed, of the tire and another embodiment of the tire replacement warning device of the present invention.

### DETAILED DESCRIPTION OF THE PREFERRED EMBODIMENT

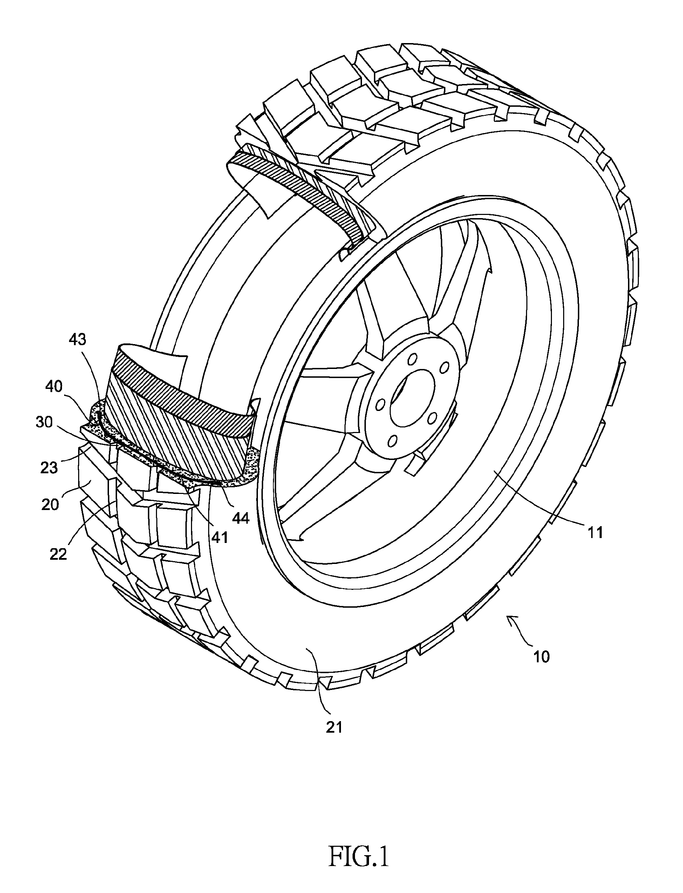

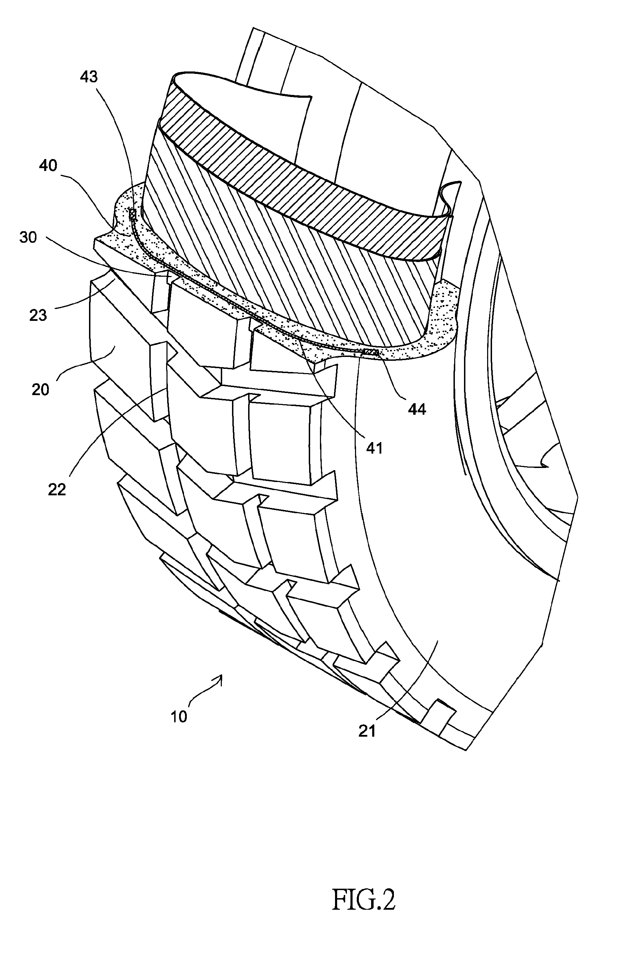

Referring to Figs. 1 to 3, the tire 10 of the present invention is mounted to a rim 11 and comprises a tread 20 and two sidewalls 21 are located on two sides of the tread 20. The tread 20 comprises first tread grooves 22 and second tread grooves 23 which transversely intersect the first tread grooves 22. The first tread grooves 22 are defined along the longitudinal direction of the tread 20. A safety face 30 protrudes from the inner end of one of the first tread groove 22. A sensing device 40 is located in the tread 20 and beneath the safety face 30.

The sensing device 40 has a sensing line 41 and two integral circuits 43, 44. The sensing line 41 is connected between the two integral circuits 43, 44 so as to form a circuit. The two integral circuits 43, 44 can be chips or micro circuits. The sensing device 40 is located in the tread 20 when the tire 10 is manufactured. The sensing line 41 is located across the tread 20 and the two integral circuits 43, 44 are located close to two the sidewalls 21 respectively. The sensing line 41 is located beneath the safety face 30 so that the sensing line 41 is covered by the safety face 30 and parallel to the curved surface of the safety face 30.

A warning signal receiver 60 is able to receive the wireless signals from the sensing device 40. The warning signal receiver 60 comprises a speaker 61, a receiving portion 62 which receives the specific frequency of the wireless signals from the sensing device 40, and a light emitting member 63 which is connected to the receiving portion 62. When the receiving portion 62 receives the specific frequency of the wireless signals from the sensing device 40, the speaker 61 generates audio signals and the light emitting member 63 flashes to let the user know that the tire needs to be replaced.

The warning signal receiver 60 is installed in a vehicle, or the warning signal receiver 60 is an individual receiver and connected with a power source of the vehicle, or the warning signal receiver 60 is designed as a software such as an application (App) which can be downloaded by cloud technology to an intellectual phone so as to receive the wireless signals from the sensing device 40.

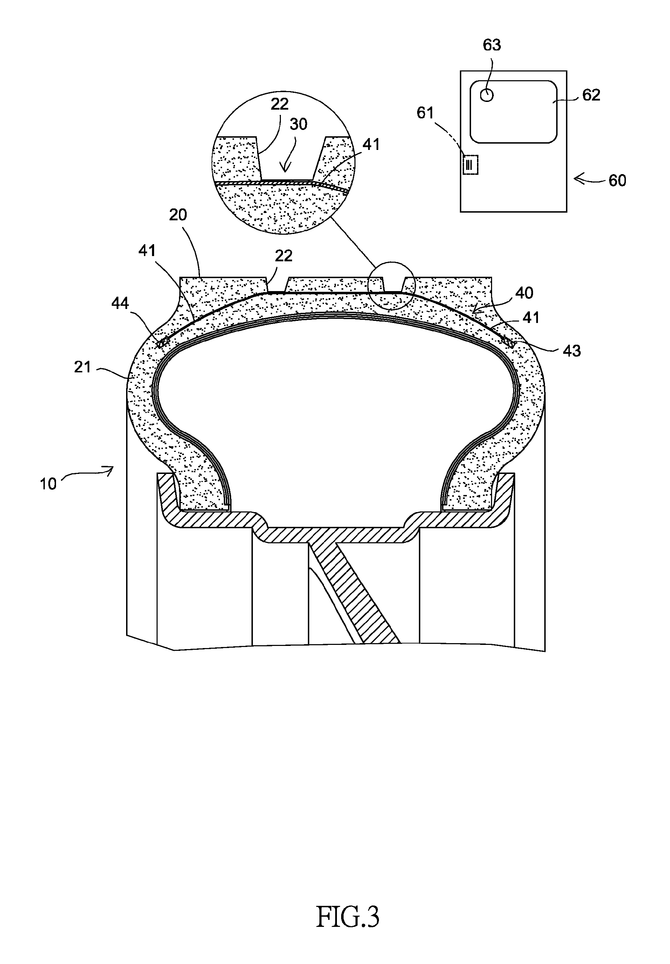

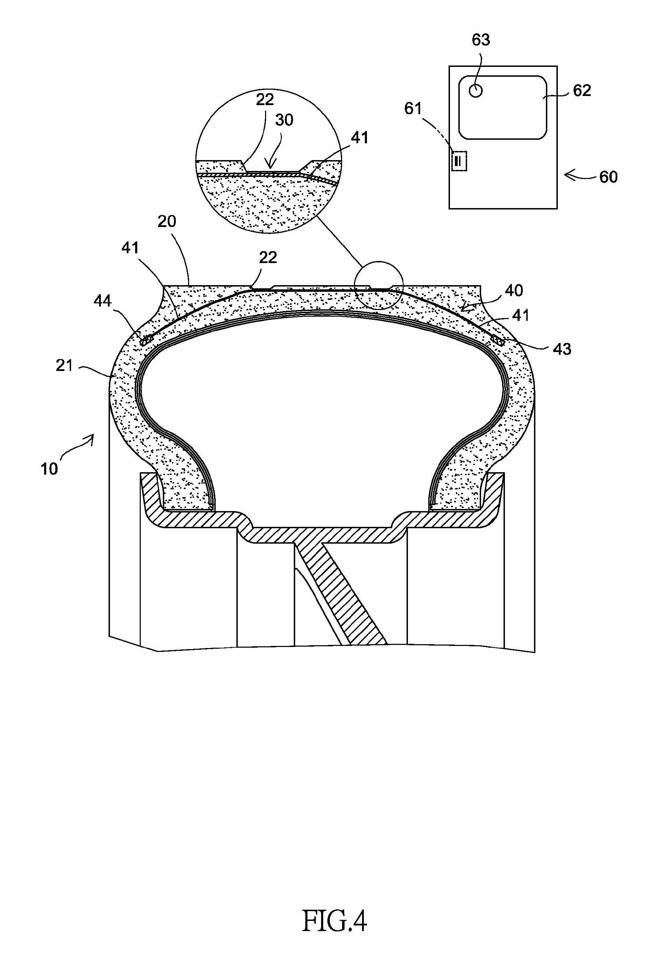

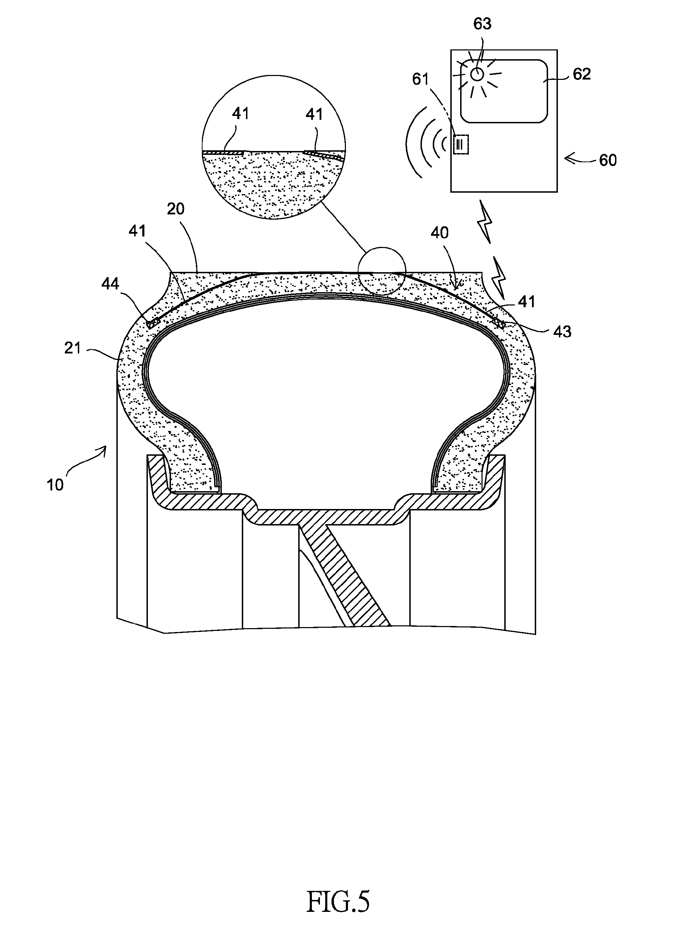

As shown in Figs. 3 to 5, along with the use of the tire 10, the depths of the first and second tread grooves 22, 23 become shallow and when the safety face 30 is worn out, the sensing line 41 is exposed and directly in contact with the road, the friction may break the sensing line 41. The circuit is then cut off so that the integral circuits 43, 44 send a signal to the warning signal receiver 60. The speaker 61 generates audio signals and the light emitting member 63 flashes to let the user know that the tire needs to be replaced.

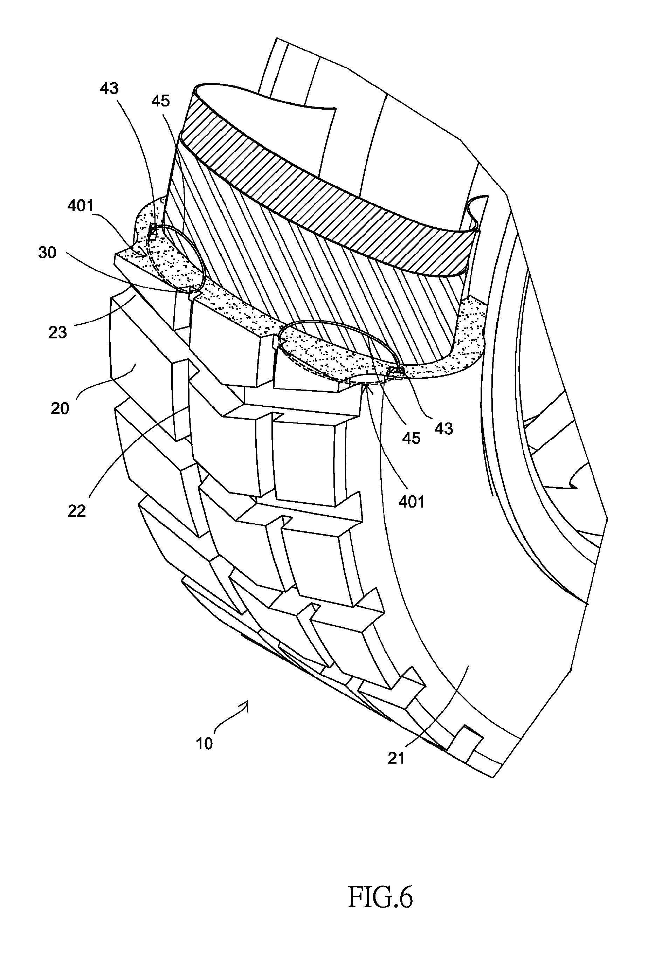

As shown in Fig. 6, the sensing device 40 has a sensing line 45 and an integral circuit 43, wherein the sensing line 45 is in a form of a coil and two ends of the sensing line 45 are connected to the integral circuit 44. The integral circuit 43 is located close to the sidewall 21 and the sensing line 45 is located beneath the safety face 30. The other safety face 30 is cooperated with another set of sensing line 45 and integral circuit 43. When the safety face 30 is worn out, the sensing line 45 is exposed and directly in contact with the road, the friction may break the sensing line 45. The circuit is then cut off so that the integral circuit 43 sends a signal to the warning signal receiver 60. The speaker 61 generates audio signals and the light emitting member 63 flashes to let the user know that the tire needs to be replaced.

The sensing line 41 can be a straight wire or the sensing line 45 is a coil can achieve the purpose of the invention. The sensing lines 41, 45 can also be integrally formed with the integral circuits 43, 44.

While we have shown and described the embodiment in accordance with the present invention, it should be clear to those skilled in the art that further embodiments may be made without departing from the scope of the present invention.

## Claims

1. A tire comprising:
a tread (20) and two sidewalls (21) on two sides of the tread (20), the tread (20) having multiple tread grooves (22,23) defined therein and a safety face (30) protruding from an inner end of one of the tread grooves (22,23), and
a sensing device (40) located in the tread (20) and having a sensing line (41) which is able to emit wireless signals, the sensing line (41) located beneath the safety face (30).

2. The tire according to claim 1, wherein the sensing device (40) further comprises an integral circuit (43).

3. The tire as claimed in any one of claims 1 and 2, wherein the tread (20) comprises first tread grooves (22) and second tread grooves (23) which transversely intersect the first tread grooves (22), the first tread grooves (22) are defined along a longitudinal direction of the tread (20), the safety face (30) is located in the one of the first tread groove (22).

4. The tire as claimed in claim 2, wherein the sensing device (40) comprises two integral circuits (43,44), the sensing line (41) is connected between the two integral circuits (43,44), the sensing line (41) is located across the tread (20) and the two integral circuits (43,44) are located close to two the sidewalls (21) respectively, the sensing line (41) is located across the tread (20) and the safety face (30).

5. The tire as claimed in claim 2, wherein the sensing line (45) is in a form of a coil and two ends of the sensing line (45) are connected to the integral circuit (43), the integral circuit (43) is located close to the sidewall, the sensing line (45) is located beneath the safety face (30).

6. A tire replacement warning device comprising:
a tire as defined in anyone of claims 1 to 5, and
a warning signal receiver (60) receiving the wireless signals from the sensing device (40) .

7. The device as claimed in claim 6, wherein the warning signal receiver (60) comprises a speaker (61) and a receiving portion (62) which receives the wireless signals from the sensing device (40), the speaker (61) is connected to the receiving portion (62).

8. The device as claimed in claim 7, wherein the warning signal receiver (60) comprises a light emitting member (63) which is connected to the receiving portion (62).

9. The device as claimed in claim 7, wherein the warning signal receiver (60) is adapted to be installed in a vehicle.

10. The device as claimed in claim 7, wherein the warning signal receiver (60) is an individual receiver and adapted to be connected with a power source.
